(19) Europäisches Patentamt
European Patent Office
Office européen des brevets

(11) **EP 4 371 800 A1**

(12) **EUROPEAN PATENT APPLICATION**

(43) Date of publication:
**22.05.2024  Bulletin 2024/21**

(21) Application number: **23197349.6**

(22) Date of filing: **14.09.2023**

(51) International Patent Classification (IPC):
**B60L 1/00** $^{(2006.01)}$      **B60L 15/20** $^{(2006.01)}$
**B60L 50/16** $^{(2019.01)}$      **B60L 50/53** $^{(2019.01)}$
**B60L 50/61** $^{(2019.01)}$      **B60L 58/13** $^{(2019.01)}$

(52) Cooperative Patent Classification (CPC):
**B60L 50/53; B60L 1/00; B60L 15/2054;**
**B60L 50/16; B60L 50/61; B60L 58/13;**
B60L 2200/26; B60L 2260/26; B60L 2260/50

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **15.11.2022  GB 202217042**

(71) Applicant: **Hitachi Rail Limited
London EC4M 7AW (GB)**

(72) Inventors:
• **DAUTEL, Christopher
London, EC4M 7AW (GB)**
• **DUGOURD, Paul
London, EC4M 7AW (GB)**

(74) Representative: **Mewburn Ellis LLP
Aurora Building
Counterslip
Bristol BS1 6BX (GB)**

(54) **TRAIN AND METHOD**

(57)     A train for travelling on a railway network including routes with external power supply infrastructure and on routes without external power supply infrastructure. The train includes a control system configured to operate a drive system of the train in a battery-only mode where power is drawn only from the one or more on-board electrical storage systems. The control system is configured to: monitor an actual state of charge of the one or more on-board electrical storage systems; calculate a predicted future state of charge of the one or more on-board electrical storage systems, at a time in the future, based on the actual state of charge of the one or more on-board electrical storage systems and a planned usage of the train; and modify one or more operating parameters of the train based on a difference between the predicted future state of charge at the time in the future and a target future state of charge.

Fig. 4

**Description**

Field of the Invention

The present invention relates to a train, and a method of operating a train.

Background

Conventional bi-modal trains are configured to operate two different drive modes in which the train propulsion systems receive electrical power from two different configurations of power sources. The first, externally powered, drive mode is provided on electrified railway lines which have an external power supply infrastructure. The second, self-powered, drive mode is provided on non-electrified railway lines. The bi-mode train can cross to and from electrified and non-electrified sections of the railway lines by changing between their two available drive modes.

In the externally powered drive mode, the bi-mode trains receive electrical power from the external power supply infrastructure via external current collectors for example pantographs which connect to overhead lines (OHL) or shoe gear which connect to live rails on the railway tracks.

In the self-powered drive mode, bi-mode trains receive electrical power from on-board power sources. Conventionally, bi-mode trains comprise on-board generator units (GUs), such as diesel engine-powered electricity generators, which generate the electrical power.

When a bi-mode train changes between its externally powered drive mode and its self-powered drive mode the control system manages the handover of the propulsion systems according to Automatic Power Change Over (APCO) routines A' and B'. EP 2689983 A proposes an APCO for a bi-mode train transitioning from an externally powered drive mode, which uses OHLs, to a self-powered drive mode which uses GUs.

Other trains have a hybrid self-powered drive system comprising GUs assisted by on-board energy storage systems (OBESSs), such as batteries. On conventional hybrid trains, GUs are used as the main source of motive power. The GUs are typically assisted by the OBESSs when the train is accelerating. The OBESSs contribute to overall improvements in energy consumption by enabling regenerative braking in which kinetic energy of the train is converted into regenerated electrical power for subsequent re-use.

However, conventional hybrid trains require that the GUs remain active at all times to provide motive power for the train and to power auxiliary systems. This contributes to greenhouse gas emissions and noise pollution, despite receiving assistance from the OBESSs in acceleration phases.

It is also desirous to decrease greenhouse gas emissions and noise pollution in around, for example, train stations, residential areas, and cities whilst also allowing the driver to maintain the timetable and avoid congestion and delays.

Summary

Accordingly, in a first aspect, embodiments of the invention provide a train for travelling on a railway network including routes with external power supply infrastructure and on routes without external power supply infrastructure, the train including a control system configured to operate a drive system of the train in a battery-only mode where power is drawn only from the one or more on-board electrical storage systems,
wherein the control system is configured to:

   monitor an actual state of charge of the one or more on-board electrical storage systems;
   calculate a predicted future state of charge of the one or more on-board electrical storage systems, at a time in the future, based on the actual state of charge of the one or more on-board electrical storage systems and a planned usage of the train; and
   modify one or more operating parameters of the train based on a difference between the predicted future state of charge at the time in the future and a target future state of charge.

Such a train can operate in a more environmentally friendly manner, for example running on battery-only mode as much as possible but whilst also retaining the flexibility desired to mitigate against delays.

The invention includes the combination of the aspects and preferred features described except where such a combination is clearly impermissible or expressly avoided.

The control system may be further configured to operate the drive system of the train in a hybrid mode in which power is drawn from an on-board generator assisted by the one or more on-board electrical storage systems.

The control system may be configured to modify one or more operating parameters of the train by selecting and implementing one or more power saving operations when the predicted future state of charge is less than the target future state of charge.

The control system may be configured to select a power saving operation to implement from a plurality of power operations based on a degree to which the predicted future state of charge is less than the target future state of charge.

The power saving operations to be selected from may include:

enhancing a regenerative braking performance;
recommending to a driver of the train that one or more auxiliary systems are switched off or have their performance reduced;
reducing a maximum output available from the one or more on-board electrical storage systems;
switching off one or more auxiliary systems or reducing their performance;
increasing an output from an on-board generator;
reducing a planned distance over which the train is scheduled to run in the battery-only mode; and
forcing an activation of an on-board generator until a predetermined heightened state of charge of the on-board electrical storage system is achieved.

The control system may be configured to switch off / reduce the performance of or recommend switching off / reducing the performance of the one or more auxiliary systems when the train is stabling (that is, stopped at a station or siding and awaiting further usage on the network). The control system may be configured to determine a notch status before reducing the maximum output available from the one or more on-board electrical storage systems. For example, the control system may be configured to determine that the notch status is 'low' (i.e., a low amount of power is required from the drive system) before reducing the maximum output available.

The control system may be configured to modify one or more operating parameters of the train by increasing utilisation of the on-board electrical storage system when the predicted future state of charge is greater than the target future state of charge.

The control system may be configured to increase utilisation of the on-board electrical storage system by an amount based on a degree to which the predicted future state of charge is greater than the target future state of charge.

Increasing the utilisation of the on-board electrical storage system may be achieved by the control system performing one or more of the following operations:

enhancing an electrical braking performance;
recommending to a driver of the train an increase of an auxiliary system performance;
increasing an auxiliary system performance;
reducing a maximum output available from an on-board generator;
increasing an output from the on-board electrical storage system;
reducing a planned distance over which the train is scheduled to run in a hybrid mode;
increasing a planned distance over which the train is scheduled to run in battery-only mode; and
forcing an activation of the on-board electrical storage system and disconnecting an on-board generator until a predetermined lowered state of charge of the on-board electrical storage system is achieved.

The control system may be configured to determine a notch status before increasing an output from the on-board electrical storage system. For example, the control system may be configured to determine that the notch status is 'low' (i.e., a low amount of power is required from the drive system) before increasing an output from the on-board electrical storage system. The control system may be configured to determine whether the train is coasting, and if so to disconnect the on-board generator such that power for one or more auxiliary systems is provided only from the on-board electrical storage system.

The control system may be configured to operate the drive system of the train in an overhead mode in which power is drawn from an overhead line through one or more pantographs of the train. The control system may be configured, when the drive system is being operated in the overhead mode, to charge the one or more on-board electrical storage systems using power drawn from the overhead line.

The control system may be configured to calculate the predicted future state of charge by obtaining from a database: (i) a distance over which the drive system must be operated in the battery-only mode; and (ii) a distance over which the drive system may be operated in the hybrid mode, and utilising these in the calculation.

The prediction may utilise a driver headcode, which denotes of a terminus of the train.

The control system may be further configured to calculate the predicted future state of charge by obtaining a driving plan, the driving plan including information on a notch setting for each of a plurality of stage of a planned journey, and utilising this in the calculation. The control system may be configured to utilise a simulation to determine the predicted future state of charge. A remote system may be in communication with the control system and may provide an updated driving plan. The updated driving plan may include, for example, a request that a delay in the running of the train is made up.

Predicting the future state of charge may include determining one or more recharging phases of the planned usage of the train, during which the state of charge of the on-board electrical storage systems is increased.

Predicting the future state of charge may include utilising the equation:

$$y = a \cdot A + b \cdot B$$

where *y* is the predicted energy consumption, *a* is the distance over which the train is planned to operate in battery only mode, *b* is the distance over which the train is planned to operate in a hybrid mode, *A* is a constant representing the power consumed per unit distance when operating in the battery only mode, and *B* is a constant representing the power consumed per unit distance when operating in the hybrid mode.

The predicted future state of charge may be arrived at utilising the equation:

$$z = x - y$$

where x is the actual state of charge of the one or more on-board electrical storage systems, and z is the predicted future state of charge.

The control system may be configured to receive both:

a driving setting selection, and
an operator specified power mode selected from the two power modes, associated with a respective region of the railway network ,
and whilst the train is in the respective region the control system is configured to modify one or more parameters associated with the operator specified power mode, or to change from or ignore the operator specified power mode, based on the driving setting selection.

The control system may be configured to calculate the predicted state of charge based further on the driving setting selection.

Whilst the train is in the respective region, the control system may be configured:

in response to receiving a normal driving setting selection, to operate the drive system according to the operator specified power mode;
in response to receiving an economical driving setting selection, to increase the size of the respective region when the operator specified power mode is the battery-only mode; and
in response to receiving a fast driving setting selection, to reduce the size of the respective region when the operator specified power mode is the battery-only mode.

The control system may be configured to receive further driving setting selections and take different actions in line of the further driving setting selections. For example, the driving setting selection may be a semi-fast driving setting selection where the size of the respective region is only reduced around predetermined points along the railway network (e.g., stations).

The control system may be configured to operate the drive system of the train in each of three power modes: the hybrid mode, the battery-only mode, and an over-head mode in which power is drawn from an electrified section of the railway network in which external power supply infrastructure is present. The operator specified power mode may therefore be selected from the three power modes. The control system may be configured to automatically operate the drive system of the train in each of the two or three power modes. That is, the control system may not await driver input, and instead it may transition between power modes without action from the driver.

The train may be a push-pull type train, that is the locomotive elements of the train (the railway vehicles including one or more traction motors) may be located near the front of the train, near the rear of the train, or both.

In response to receiving the economical driving setting selection, the control system may be configured to double the size of the respective region when the operator specified power mode is the battery-only mode.

In response to receiving the fast-driving setting selection, the control system may be configured to reduce to zero the size of the respective region when the operator specified power mode is the battery-only mode. In other words, the fast-driving setting selection may cause the controller to ignore the operator specified power mode when that power mode is battery-only mode or cause the drive system to operate in battery-only mode only when the train has arrived at a specific location (e.g., a station). The control system may therefore operate the drive system in the hybrid mode instead of the operator specified power mode.

The driving setting selection may be received from a driver of the train, for example through a human-machine interface. Alternatively, the driving setting selection may be received from an automatic operation system.

The control system of the train may include a database, the database containing data defining regions of the railway network in which the drive system should operate in a given operator specified power mode. The control system of the train may include a location determination module configured to determine the location of the train, and the control system is configured to look-up the location in the database to identify the given operator specified power mode. The control system may be configured to connect to a remote-control centre and to receive, from the remote-control centre, data defining further regions of the railway network in which the drive system should operate in a given operator specified power mode.

The train may include an antenna, configured to communicate with one or more beacons located along the railway network, and to derive from signals received from the or each beacon an operator specified power mode for a given region of the railway network. The signal(s) received from the or each beacon may include a beacon identifier, and the control system may be configured to look-up the received beacon identifier in a database to derive the operator specified power mode for the given region of the railway network. The signal(s) received from the or each beacon may include the operator specified power mode for the respective region of the railway network. Deriving the operator specified power mode from the or each beacon may include referencing the driving setting selection.

The control system may further include a driver assistance system, configured to provide operating data indicating an estimated schedule of the train to the driver calculated based on the driving setting selection. The driver assistance system may be configured to recommend a given driving setting selection to the driver based on the estimated schedule of the train.

The control system may further include a recording module, configured to store the driving setting selected by the driver of the train.

The control system may be configured to reset the driving setting selection when either:

the train is stopped at a station; or
the driver is changed.

In response to receiving a normal driving setting selection, the control system may operate the drive system according to the operator specified power mode. In response to receiving an economical driving setting selection, the control system may increase the size of the respective region when the operator specified power mode is the battery-only mode. In response to receiving a fast-driving setting selection, the control system may reduce the size of the respective region when the operator specified power mode is the battery-only mode

The control system may receive further driving setting selections and take different actions in line of the further driving setting selections. For example, the driving setting selection may be a semi-fast driving setting selection where the size of the respective region is only reduced around predetermined points along the railway network (e.g., stations).

The control system may be configured to operate the drive system of the train in each of three power modes: the hybrid mode, the battery-only mode, and an over-head mode in which power is drawn from an electrified section of the railway network in which external power supply infrastructure is present. The operator specified power mode may therefore be selected from the three power modes.

In a second aspect, embodiments of the invention provide a method of operating a train on a railway network, the railway network including routes with external power supply infrastructure and routes without external power supply infrastructure, the train including a control system configured to operate a drive system of the train in a battery-only mode where power is drawn only from one or more on-board electrical storage systems, wherein the control system:

monitors an actual state of charge of the one or more on-board electrical storage systems;
calculates a predicted future state of charge of the one or more on-board electrical storage systems, at a time in the future, based on the actual state of charge of the one or more on-board electrical storage systems and a planned usage of the train; and
modifies one or more operating parameters of the train based on a difference between the predicted future state of charge at the time in the future and a target future state of charge.

The method of the second aspect may include any one, or any combination insofar as they are compatible, of the optional features set out with reference to the first aspect.

Further aspects of the present invention provide: a computer program comprising code which, when run on a computer, causes the computer to perform the method of the second aspect; a computer readable medium storing a computer program comprising code which, when run on a computer, causes the computer to perform the method of the second aspect; and a computer system programmed to perform the method of the second aspect.

Brief Description of the Drawings

Embodiments of the invention will now be described by way of example with reference to the accompanying drawings in which:

Figure 1 shows a schematic of a drive system for a train;

Figure 2 shows a schematic of a train, including the drive system of Figure 1;

Figure 3 shows a schematic of a portion of a railway network on which the train of Figure 2 operates;

Figure 4 shows a feedback loop for the control of energy;

Figure 5 shows a communications flow schematic within the train of Figure 1;

Figure 6 shows a number of solutions to lower or recover the state of charge of an on-board energy storage system;

Figure 7 is a schematic diagram showing components of the control system of the train of Figure 1;

Figure 8A is a schematic diagram of a railway network illustrating the relationship between power mode and zone where zones are defined in a two-dimensional manner; and

Figure 8B is a table describing the switchover pattern for a train traversing the railway network of Figure 8A.

Detailed Description and Further Optional Features

Aspects and embodiments of the present invention will now be discussed with reference to the accompanying figures. Further aspects and embodiments will be apparent to those skilled in the art.

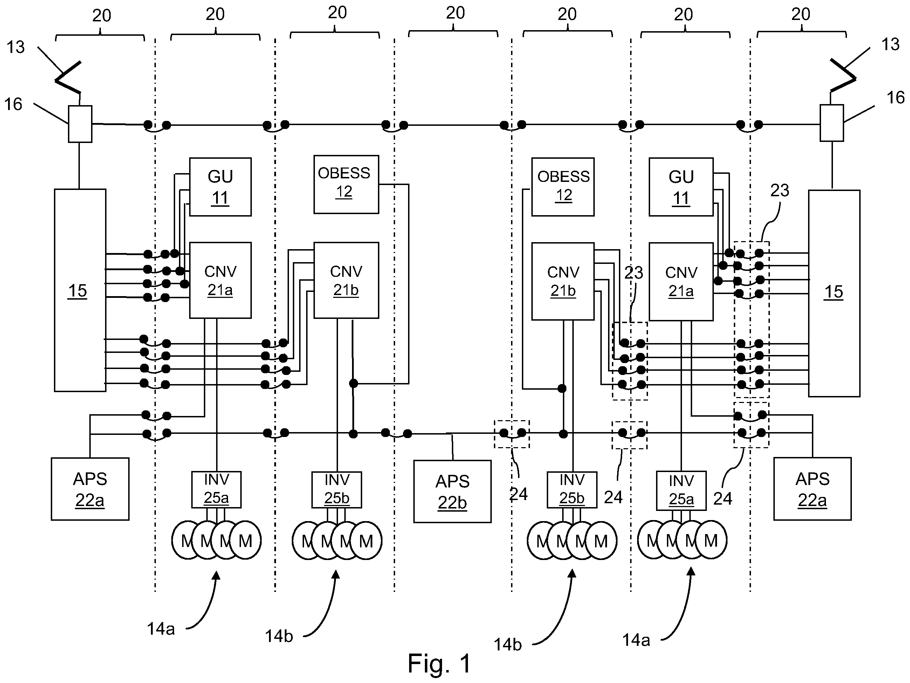

Figure 1 shows a schematic of the drive system for a train, sometimes referred to as a tri-mode train where it is operable in each of: a battery-only mode, a hybrid-mode, and an over-head mode. The train is driven by traction motors 14a and 14b using electrical power provided by the external power supply infrastructure (over-head mode), or by generator units, GUs, 11 with optional support from the on-board energy storage systems (hybrid mode), OBESSs, 12, or by the OBESSs alone (battery-only mode) according to the drive mode being provided by the control system. In at least some examples, the train is operable in only the battery-only mode, or only the battery-only mode and the hybrid mode.

External current collectors 13 are provided to connect to the external power supply infrastructure on electrified sections of the railway line. Typically, the external current collectors are roof-mounted pantographs, which are raised by the control system to connect to overhead lines (OHL) (not shown). However, they may be shoe gear provided beneath the train for connecting to live rails along the tracks. Main voltage transformers 15 are provided to adjust the voltage level between the external power supply infrastructure and the on-board systems. Vacuum circuit breakers (VCBs) 16, or similar, are provided to disconnect the pantographs from the main voltage transformers when they are not in use.

Typically, each GU 11 combines a diesel engine and an electricity generator powered by that engine to produce AC electrical power. However, other arrangements are possible. For example, the Gus could be fuel cells in which a fuel, such as hydrogen, is oxidised to generate DC electrical power. Each OBESS 12 is typically a battery system having an associated state of charge (SoC).

The train may comprise a series of coupled cars 20 in which, as shown in Figure 1, some cars contain respective Gus 11 and first traction motors 14a, and other cars contain respective OBESSs 12 and second traction motors 14b. Alternatively, the Gus and OBESSs may be housed in the same cars, along with their respective first and second traction motors.

Other cars are shown in Figure 1 which do not contain Gus or OBESSs, such as for example the lead and tail cars which typically carry the external current collectors 13 and house the main voltage transformers 15. Auxiliary power supply (APS) units 22a, 22b provided to power the train's auxiliary systems (i.e. power outlets, lights, doors, and air-conditioning systems etc.) may conveniently be located in cars without Gus and OBESSs.

First converter-inverter devices are provided on the cars with the Gus 11 and second converter-inverter devices are provided on the cars with the OBESSs 12. Each first converter-inverter device comprises a first converter circuit 21a and a first inverter circuit 25a joined to its converter circuit by a first DC link, the device providing three phase AC power from the first inverter circuit to drive respective first traction motors 14a. Similarly, each second converter-inverter device comprises a second converter circuit 21b and a second inverter circuit 25b joined to its converter circuit by a second DC link, the device providing three phase AC power from the second inverter circuit to drive respective second traction motors 14b. The first and second converter circuits contain AC/DC converters to convert AC electrical power from the external current collectors 13 to DC electrical power. Moreover, in the case of the first converter circuits, these AC/DC converters can also convert AC electrical power from the Gus to DC electrical power. In the case of the second converter-inverter devices, the second DC-links can receive DC electrical power from the OBESSs.

Capacitors (not shown) help the first and second DC links to maintain constant DC voltages. When the DC links receive electrical power from the external current collectors 13 or the Gus 11 they are maintained at a first DC voltage and when DC links receive electrical power from the OBESSs 12 they are typically maintained at a second, different, DC voltage.

The control system manages the first 21a and second 21b converter circuits, and the first 14a and second 14b traction motors. Generally, the control system has a speed controller operable (e.g., by a driver) to select a target vehicle velocity which is converted into target torques for the traction motors. The control system adjusts the amount of electrical power supplied to the first and second traction motors to achieve the target vehicle velocity.

The APS units 22a, 22b receive DC electrical power from the first and second DC links, with the DC electrical power being conducted to neighbouring cars though inter-car DC electrical connectors 24. The control system can close such DC electrical connectors 24 along connecting lines joining APS units as needed to enable sharing of DC electrical power between selected APS units, as discussed in more detail below. However, the control system can also open the DC electrical connectors 24 to electrically isolate the APS units from each other.

In the over-head mode, high voltage, single phase AC electrical power is obtained from the OHLs through the pantographs 13 and applied, via the closed VCBs 16, to the main voltage transformers 15. The resulting reduced voltage AC electrical power is supplied to the first 21a and second 21b converter circuits. The AC electrical power is conducted to neighbouring cars though inter-car AC electrical connectors 23. The AC electrical power is converted to DC electrical power in the first 21a and second 21b converter circuits. The DC electrical power is then conducted by the first and second DC links to the first 25a and second 25b inverter circuits which provide the three phase AC power required by the first 14a and second 14b traction motors. In this way the first and second traction motors can provide torque contributions using electrical power from the external power supply infrastructure. During this operation, the first and second DC links are maintained at the first DC voltage.

The OBESSs 12 may be fitted with DC choppers to step down the first DC voltage in order to enable charging of the OBESSs using electrical power from the OHLs. In this way the OBESSs can increase their SoC on electrified sections of the railway line. The OBESS may also be connected directly to the DC link(s).

Furthermore, when the train is actively braking, the control system may operate the first 14a and second 14b traction motors as generators to produce a negative torque contribution. The traction motors thus act as generators to convert kinetic energy of the train into regenerated electrical power. The regenerated electrical power can be fed back to the external power supply infrastructure via the inverter circuits 25a, 25b, the converter circuits 21a, 21b, the transformers 15 and the pantographs 13. However, another option is for the regenerated electrical power from the second traction motors, and optionally the first traction motors, to be stored in the OBESSs 12 to increase their SoC. Yet another option is for the regenerated electrical power from the first traction motors, and optionally the second traction motors, to be dissipated as heat in brake grid resistors (not shown).

When electrical power is applied to the DC links, step changes in voltage and capacitive loads can induce high in-rush currents. To avoid system damage by these high currents, first soft-charging circuits (not shown) can be provided between the main voltage transformers 15 and the converter circuits 21a, 21b to limit the current while the first and second DC links are being charged to achieve the first DC voltage. In particular, the control system can be configured to connect the main voltage transformers to the converter circuits using the first soft-charging circuits when switching from either of the self-powered drive modes to the externally powered drive mode, or when bringing the DC links to the first DC voltage at the beginning of train operation.

In the hybrid mode, electrical power is provided to the first traction motors 14a from the Gus 11. During acceleration phases electrical power is also provided to the second traction motors 14b from the OBESSs 12.

The main voltage transformers 15 are disconnected from the first 21a and second 21b converter circuits and the external current collectors are disconnected from the external power supply infrastructure, for example by lowering the pantographs 13. The VCBs 16 are also opened.

Three-phase AC electrical power generated by the Gus 11 is supplied to the first converter circuits 21a and converted to DC electrical power which is conducted in the first DC links. These are maintained at the first DC voltage. The first inverter circuits 25a invert the DC electrical power to three phase AC power to drive the train using the first traction motors 14a.

DC electrical power outputted by the OBESSs 12 is supplied to the second DC links, which are maintained at the second DC voltage. The DC electrical power is inverted by the second inverter circuits 25b to provide the three phase AC power required by the second traction motors 14b.

Second soft-charging circuits may be provided between the OBESSs 12 and their second DC links to limit in-rush current when bringing the DC links to the second DC voltage. For example, the control system can connect the OBESSs to their DC links using the second soft-charging circuits when first charging the DC links to the second DC voltage at the beginning of train operation, or when switching from the externally powered drive mode to either of the self-powered drive modes.

DC electrical power can be provided to neighbouring cars that do not have Gus 11 or OBESSs 12 through the inter-car DC electrical connectors 24. The APSs 22a, 22b have their own inverters and transformers enabling them to receive power at either the first or second DC voltage. In particular, first APS units 22a connected to the first converter-inverter devices receive power at the first DC voltage and are isolated from second APS units 22b connected to the second converter-inverter devices which receive power at the second DC voltage. Therefore, in the hybrid self-powered drive mode the first APS units 22a and the second APS units 22b receive power at different voltages. However, the transformers within the APS units allow the first and second APS units to provide the same voltage to the auxiliary systems regardless of their input power source.

In the hybrid self-powered drive mode, the control system adjusts the amount of electrical power generated by the Gus 11 and outputted by the OBESSs 12 to achieve target torques for the first 14a and second 14b traction motors. Typically, the control system is configured to prioritise the generation of power from the Gus, with torque being mainly provided by the first traction motors. When the Gus and first traction motors are unable to achieve the target torques, the control system demands power from the OBESSs to provide additional torques from the second traction motors. This is most likely to happen during the acceleration phase of a journey when the Gus operate at full power. When the railway vehicle reaches the target velocity, the target torques are reduced and the control system reduces the power demanded from the OBESSs and then the Gus, and the vehicle enters a "cruising" state. If the target torques reduce further to zero (and there is no active braking of the vehicle), "cruising" becomes "coasting".

When active braking of the train is required, one braking option in the hybrid self-powered mode is for the control system to perform regenerative braking. In this case the second traction motors 14b operate as generators to produce a negative torque contribution. The second traction motors thus operate as generators, and kinetic energy of the railway vehicle is converted into regenerated electrical power which is used to charge the OBESSs 12. In this way, the OBESSs can improve fuel consumption by using the regenerated power to provide support to the Gus 11 during acceleration.

However, the diesel engines of Gus 11 of trains operating in the hybrid self-powered drive mode still consume fuel and generate carbon dioxide emissions because the Gus are always running in this mode. In particular, combustion engines consume fuel and produce emissions even when idling. However, the third OBESS-only drive mode enables the Gus to be disabled, reducing overall fuel consumption and emissions for a journey.

Moreover, in the hybrid self-powered drive mode the first DC links and second DC links are operated at the first and second DC voltages and are thus electrically isolated from each other. Therefore, only regenerative power from generator operation of the second traction motors 14b and inverter circuits 25b can be used to charge the OBESSs. Regenerated power from generator operation of the second traction motors 14a and inverter circuits 25a associated with the Gus can be dissipated in brake grid resistors.

In the battery-only mode, the control system disables the Gus 11 and electrical power is provided to the second 14b traction motors from the OBESSs 12 alone. Thus, the combustion engines can be powered off, saving fuel and reducing emissions.

DC electrical power outputted by the OBESSs 12 is supplied to the second DC links. These links are therefore maintained at the second DC voltage. The control system brings the second DC links to the second DC voltage using the second soft-charging circuits as part of switching from the externally powered drive mode to the OBESS-only drive mode. The second inverter circuits 25b invert the DC electrical power to three phase AC power to drive the train using the second traction motors 14b.

The control system can perform regenerative braking in which the second traction motors 14b operate as generators to produce a negative torque contribution. The second traction motors thus operate as generators, and kinetic energy of the railway vehicle is converted into regenerated electrical power which is used to charge the OBESSs 12.

In addition, the control system is configured to close inter-car DC electrical connectors 24 along the connecting lines joining the first 22a APS unit. Thus, DC electrical power outputted by a given OBESSs 12 can be shared with the APS unit. Each of the APS units has an electrical network redundancy to the following electrical equipment, therefore at least one APS being connected to an active power resource (e.g. GU or batteries) enables that equipment to work. Or, by closing inter-car DC electrical connectors 24 along the connecting lines, the first 22a and second 22b APS unit can be joined. Consequently, the power outputted from the OBESSs 12 can be shared among across more than one APS unit. Accordingly, all the APS units connected in this way are configured to power the auxiliary systems using DC electrical power provided at the second DC voltage. Advantageously, this arrangement allows the Gus 11 to be shut down completely while still ensuring power is provided to all the APS units and essential systems.

Alternatively, the drive system may be configurable such that electrical power outputted by the OBESSs 12 can be used to drive the first traction motors 14a. Advantageously, this allows the same motive power to be achieved in the OBESS-only drive mode as in the externally powered and hybrid self-powered drive modes. Moreover, the connection of the OBESSs to the first traction motors allows generator operation of the first traction motors and the first inverter circuits 25a to be used to charge the OBESSs during regenerative braking. This arrangement enables more kinetic energy of the train to be recovered during braking and reused by the OBESSs.

For example, in one arrangement, the control system is configured so that the second DC links provide DC electrical power to the first DC links via closure of internal APS contactors of the first APS units 22a. A similar function, however, can be achieved by closure of the DC electrical connectors 24 on the connecting lines between the first APS units 22a and their respective first DC links. In this case, any internal APS contactors of the first 22a and second 22b APS units are kept closed allowing these DC electrical connectors 24 to act as APS contactors managing connecting/disconnecting of the first and second DC-links. Whether the APS contactors are of the internal type or are of external type formed by the DC electrical connectors 24, DC electrical power flows from the second converter-inverter devices associated with the OBESSs 12 to the first converter-inverter devices in the opposite direction to its direction of flow in the other drive modes. Thus, the first DC links are maintained at the second DC voltage in the third drive mode, and this DC electrical power is then inverted to three phase AC power by the first inverter circuits 25a to drive the first traction motors 14a. This arrangement allows the OBESSs to provide power to the both the first and second traction motors with little or no additional drive system infrastructure.

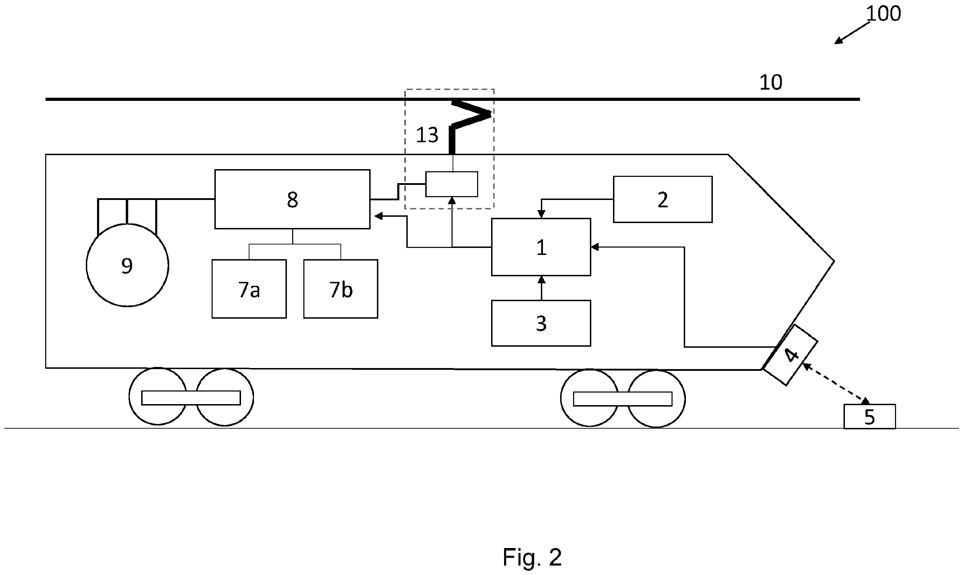

Figure 2 shows a schematic of a train 100, including the drive system of Figure 1. The train 100 includes a control system 1, also referred to a control unit which is connected to a location monitor 2 (for example a GPS unit). It's also connected to a database 3, which may contain operating data regarding the train (for example a planned route or usage, as discussed in detail below). The control system is also connected to an antenna 4, which is used to communicate with trackside beacons 5. Data received the trackside beacons via antenna 4 is relayed to the control system 1, and decisions can be made based upon it. The control system 1 is also connected to power converter 8, which can be for example the power converter circuits 21a and 21b discussed above. The power converter 8 is connected to: motor 9 (e.g. traction motors for moving the vehicle), energy storage systems (e.g., batteries) 7a and the diesel engines of the GUs 7b, and an overhead power module 6. The overhead power module includes: a pantograph, a transformer, and a vacuum circuit breaker.

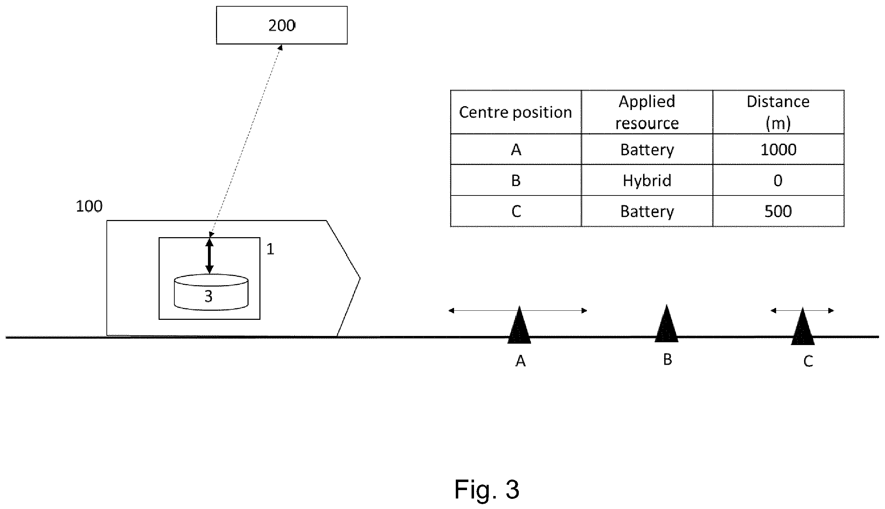

Figure 3 shows a schematic of a portion of a railway network on which the train of Figure 2 operates. The control system 1 communicates with both database 3 and also a remote-control centre 200, so receive operating data pertaining to which resource should be applied (hybrid mode, battery-only mode, or overhead mode). In the example shown in Figure 3, the train is in a non-electrified area and so the applied resources are: battery-only mode for a distance 500 metres either side of a point A on the line; hybrid mode at point B on the line; and battery-only mode for a distance 250 metres either side of a point C on the line.

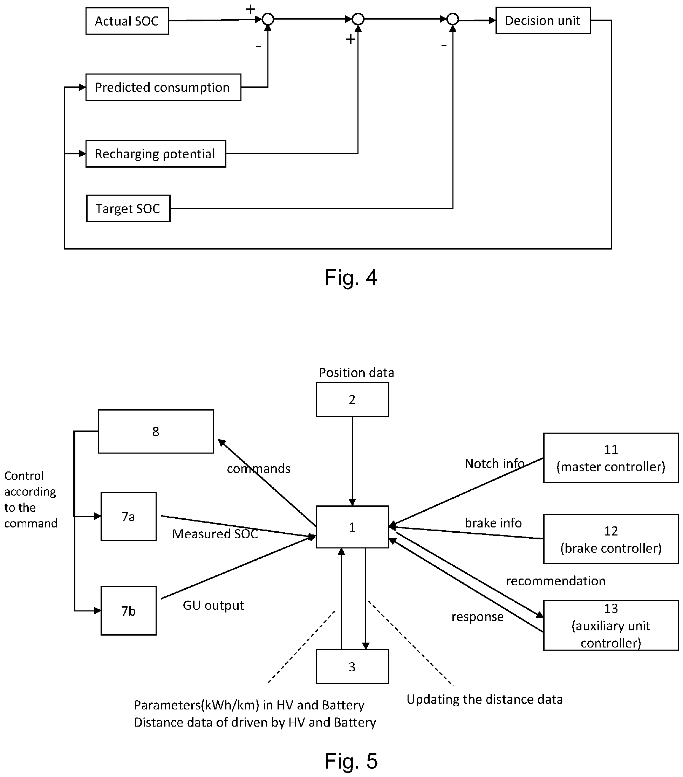

Figure 4 shows a feedback loop for the control of energy as implemented by the control system 1. The actual state of charge (SOC) is read in, and a predicted consumption over a period of time is taken away to arrive at a modified state of charge. Next, any recharging potential (operation along overhead lines, stopping at stations, regenerative braking etc.) is added to the modified state of charge to arrive at a predicted state of charge at a future time. The predicted state of charge at this future time is then compared with a target state of charge (for example as stored in a database), and the difference between the two is provided to a decision unit (forming a part of the control system 1). In this approach, the feedback loop works to compensate the deviation in the future between the target SoC and future SoC at a certain location in front of the current position (e.g. a future SoC at a future time and/or place). Advantageously, it can provide the vehicle with a range of solutions to apply for compensation from a less impactful to more impactful. These can be provided step-wise until the future / certain location is reached, as well as providing flexible adaptation in light of differences in operation circumstance, These differences can be, for example, the number of passengers or the seasonable change in energy demand by climate systems (e.g. heating or AC) or others. Furthermore, the feedback loop would be available with a relatively small number of checkpoints at which the SoC is monitored, and a fully planned map of SoC checks along the travelling route is not required.

Alternatively, it would also be possible that by having completed the whole predictive calculation beforehand (e.g. before the train begins a journey) instead of running the predictive calculation regarding energy consumption during travelling on a route, the database stores the planned SoC along the route. Consequently, the system operates the feedback loop to suppress the deviation between the actual SoC at the present position and the planned SoC associated with points along the route. Contrasting to the previous approach, it would require less on-board calculation resource and so is more advantageous for retrofitting to existing vehicles with limited computing resources.

Figure 5 shows a communications flow schematic within the train of Figure 1. The control system 1 is connected to the location monitor (e.g., GPS unit) 2 and so receives position data therefrom. It's also connected in a bidirectional manner with database 3. The database stores, for example, parameters such as energy consumption per unit distance (e.g., kWh/km) for both the hybrid mode and battery-only mode and data such as a distance driven in each of the power modes. The specific values will depend on the makeup of the train and its components, but typically in battery-only mode the train would use around 4x the energy per unit distance than in hybrid mode as in battery-only mode the batteries must supply all of the power for the training (including all auxiliary functions as well as motor traction). The control system 1 can retrieve this information, and also update the data in the database (for example with updated data on the distance driven in a given power mode). The control system is also connected to, and receives data from, the batteries 7a and the diesel engines of the GUs 7b. The control system in this example receives the actual state of charge of the on-board electrical storage system and the current output from GU 7b. Whilst in Figure 5, the battery 7a and GU 7b are connected to a same power converter 8, in some examples the battery 7a and GU 7b are connected to different power converters.

The control system 1 may also, in some examples, be connected to each of: a master controller 11; a brake controller 12; and an auxiliary unit controller 13. The control system is configured to receive from the master controller 11 data relating to a notch selected by the driver (e.g., a power notch, indicative of the propulsive power the driver requests from the drive system). It is also configured to receive/send, from/to the brake controller, data relating to the braking profile and performance of the brakes of the train. For example, the brake controller may report an amount of power which is generated by regenerative braking and also can adjust the balance between the electrical brake and regenerative brake workload according to commands from the control system 1. The control system 1 may also provide recommendations to, and receives responses from, the auxiliary unit controller 13. For example, it may recommend that the HVAC, or other auxiliary systems are turned off or have their performance limited (and in some examples it may command the auxiliary unit controller 13 to do this). In reply, the auxiliary unit controller 13 can provide a response indicating whether or not the recommended action has been performed (or reporting that the commanded action has been completed). The control system 1 is also connected to, and commands, the power converter 8 in the manner discussed in detail above.

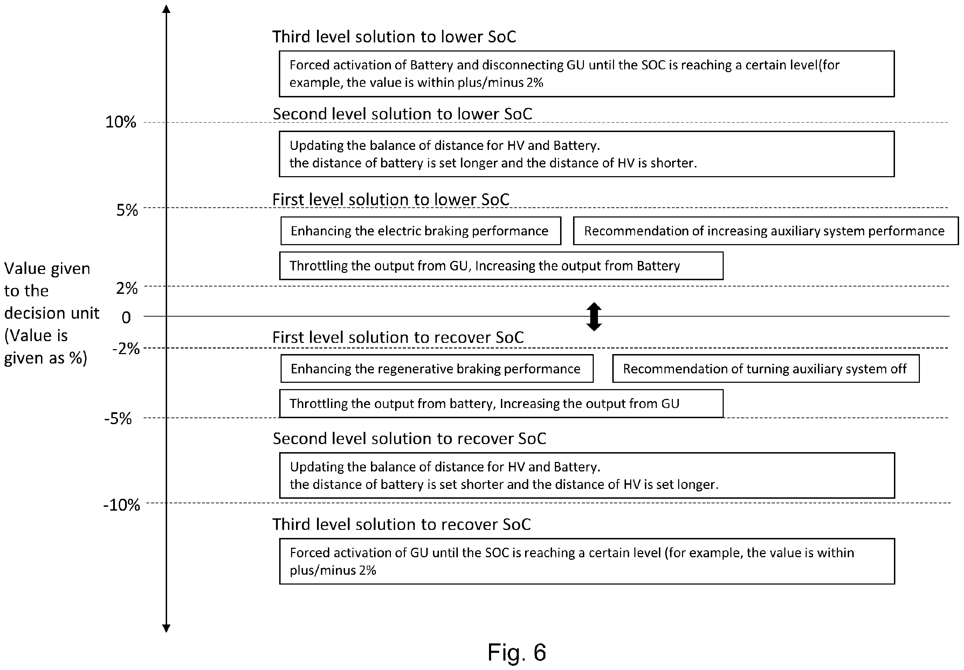

Figure 6 shows a number of solutions to lower or recover the state of charge of an on-board energy storage system. The Y axis represents the difference provided to the decision unit in Figure 4 and can be understood as the deviation of the predicted state of charge from the target state of charge. In case the vehicle has batteries without a generator unit (GU), the compensation approaches using braking or modulating the consumption of auxiliary systems.

If the difference is 0%, or within a margin of 0% (e.g., between 2% and -2%), the control system will take no action or continue with normal operation. However, beyond this margin in the + direction, and below a first positive value (e.g., 5%) the control system will implement one or more first level solutions to lower the state of charge. This can include, for example: enhancing the electric braking performance of the train in which more power is consumed with brake grid resistors as reducing the power returning to the batteries 7a; recommending an increase of an auxiliary system performance (or instructing an increase in the same); and/or throttling the output of the on-board generator unit 7b and increasing the output from the on-board energy storage system 7a through the operational adjustment of the power converter 8. Whilst Figure 2 depicts, schematically, a single power converter 8 connected to both the on-board energy storage system 7a and the generator unit 7b, further embodiments may have different power converter units connected to each respectively. If the system configuration is as discussed previously, the adjustment may be applied by a multiple power converter 8..

If the difference is greater in magnitude than the first positive value, and less than a second positive value (e.g., 10%), then the control system will implement one or more second level solutions to lower the state of charge. This can include, for example, updating a balance of distance between the hybrid-mode and battery-only mode so that the train will operate more in battery-only mode than in hybrid-mode. If the vehicle does not have the hybrid-mode, it may be possible to apply the first level of solutions capable of being managed with the battery only, to lower the state of charge.

If the difference is greater in magnitude than the second positive value, then the control system will implement one or more third level solutions to lower the state of charge. These can include, for example, a forced activation of the battery and disconnection of the generator unit until the state of charge reaches a certain level (for example, the predicted state of charge is within 2% of the target state of charge).

Similarly, if the difference between the predicted state of charge and the target one is greater than the margin and less than a first negative value (e.g., -5%) the control system will implement one or more first level solutions to recover the state of charge. These can include, for example: enhancing the regenerative braking performance of the train; recommending that one or more auxiliary systems are switched off or have their performance reduced (or instructing the same); and/or throttling the output from the on-board energy storage system and increasing the output from the generator unit.

If the difference is greater in magnitude than the first negative value, and less than a second negative value (e.g., -10%), then the control system will implement one or more second level solutions to recover the state of charge. These can include, for example: updating the balance of distance between the hybrid-mode and battery-only mode so that the train will operate more in hybrid mode than in battery-only mode.

If the different is greater in magnitude than the second negative value, then the control system will implement one or more third level solutions to recover the state of charge. This can include, for example, a forced activation of the generator unit until the state of charge reaches a certain level (for example, the predicted state of charge is within 2% of the target state of charge). If the vehicle does not have a hybrid-mode, it would be possible to remove the second and third levels of the solution for recovering the state of charge. Instead, it would be an alternative solution that the margin to the negative value is set more strictly than on a vehicle with the hybrid-mode, and its deviation would be monitored with a higher frequency to avoid the state of charge running out.

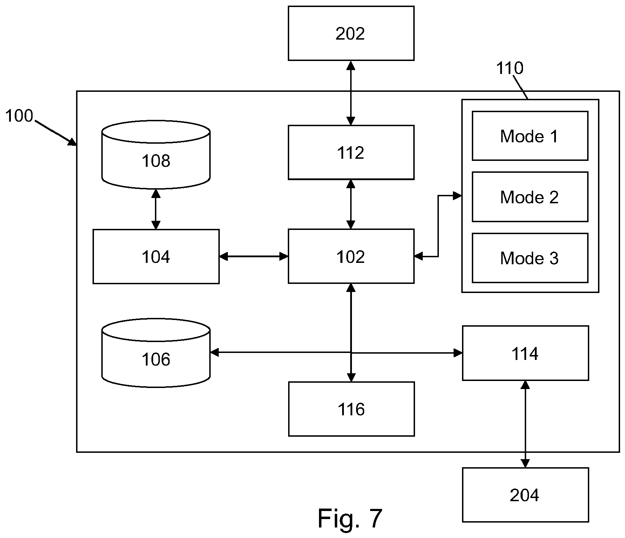

Figure 7 is a schematic diagram showing components of a control system 100 of the train, which can embody the control system 1 in Figure 2. The control system 100 includes a processor 102, which is connected to each of: a driver assistance system 104, database 106, human-machine interface 110, beacon antenna 112, network adaptor 114, and location determination module 116. The control system 100 is, as has been discussed previously, configured to operate the drive system shown in Figure 1 in each of the three power modes. It does so based on two inputs: a driving setting selection, and an operator specified power mode. The driving setting selection is provided by the driver through interaction with the human-machine interface 110. For example, the human-machine interface 110 may be a touch screen display showing each of the driving setting which can be selected (Setting 1, Setting 2, Setting 3, etc.). The operator specified power mode can be determined several ways.

In one method of determining the operator specified power mode, the processor 102 requests the location of the train from the location determination module 116. The location determination module may, for example, utilise global-positioning system signals to determine the location of the train. This location is then reported to the processor 102. The processor then uses the determined location to look-up in database 106, which can be the same as database 3 or a different database, the operator specified power mode associated with the region or zone the train has now entered.

In another method of determining the operator specified power mode, the processor 102 is provided with a beacon signal via beacon antenna 112 which is configured to receive signals from one or more beacons 202 located along the railway. This beacon signal can, in some examples, include the operator specified power mode. In other examples, the beacon signal may include a beacon identifier. The processor 102 can then use this beacon identifier to look-up in database 106 a corresponding operator specified power mode.

In either case, the control system 100 includes a network adaptor 114 which is connectable to a remote-control centre 204. This remote-control centre can provide updates or revisions to the database 106. For example, further points can be specified in the railway network, or existing points can be modified.

Once the control system 100 has obtained both the driving setting selection and the operator specified power mode, it determines whether or not to change the power mode of the drive system. Where the control system has received a first driving selection mode, for example a 'normal' driving setting selection mode, it will operate the drive system in the power mode defined by the operator specified power mode. That is, the power mode to be used is determined in response to both the current zone information in which the vehicle is travelling and the power resource information associated with the detected zone (which can be retrieve as discussed above). Therefore, the driver may have (before entering a zone associated with an operator selected power mode) is select a driving setting which will be applied when passing through the, and subsequent, zones. The control system will then switch the power mode at the boundary of zones if needed, without manual control. Where the control system has received a second driving selection mode, for example an 'economic' (or 'eco') driving selection mode, it will operate the drive system in battery-only mode as much as possible. This can be implemented by, for example, increasing a distance which is used to define the region or zones. Where the control system has received a third driving selection mode, for example a 'fast' driving selection mode, and the operator specified power mode has been predetermined by either information received from a beacon or a database located in the control system, it will ignore the operator specified power mode and operate the drive system in the hybrid mode where overhead power is not available. Where the operator specified power mode is derived based on the selected driving setting (see below, with reference to Tables 2 and 3), and the selected driving setting is 'fast', the operator specified power mode would be derived as the one which provides the most power to the train (e.g., hybrid where there is no overhead power).

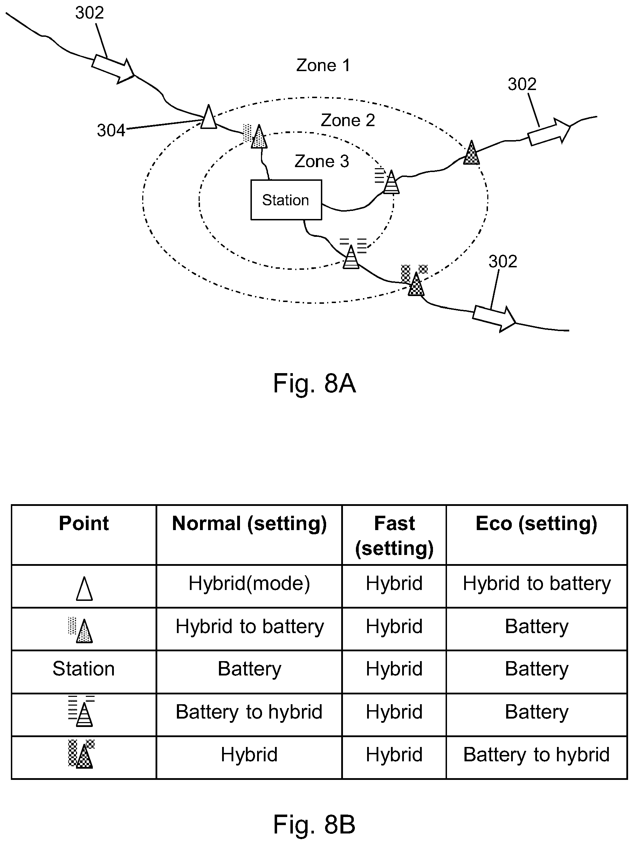

Figure 8A is a schematic diagram of a railway network illustrating this relationship between power mode and zone where zones are defined in a two-dimensional manner. The railway network in this example is not electrified (i.e., it has no external power supply infrastructure) and is traversed by a train in the direction indicated by arrows 302. That is, the train approaches the station before departing along one of two possible routes. In doing so, the train traverses a first zone (Zone 1) before entering a second zone (Zone 2) at a first point 304. Before entering Zone 2 (that is, during transit across zone 1), the control system 100 of the train determines both the driving setting selection and the operator specified power mode associated with this zone. Where the driving setting has not been selected, the control system will prompt the driver (e.g., via human-machine interface 110) to select a driving setting. Where no driving setting is selected, a default may be applied (e.g., 'normal').

The control system then determines which power mode to operate the drive system in based on the driving setting selection and the operator specified power mode associated with this zone. Figure 8B is a table describing the switchover patterns for a train as a result of the determination of the control system. For example, when the train passes point 204 and the driving setting selection is normal or fast the train continues to operate in the hybrid mode. Whereas where the driving setting selection is eco the control system changes the power mode from hybrid to battery-only (battery-only being the operator defined power mode). Similarly, when the train reaches point 206, the control system will change the power mode from hybrid to battery-only when the driving setting selection is 'normal' but retain it in the hybrid power mode where the driving setting selection is 'fast'.

Table 1 below illustrates example contents of the database 106 corresponding to the scenario described above:

*Table 1*

| Setting | Zone (previous) | Zone (current) | Switchover pattern |
|---|---|---|---|
| 1 | 1 | 2 | Hybrid |
| 1 | 2 | 1 | Hybrid |
| 1 | 2 | 3 | Hybrid to battery |
| 1 | 3 | 2 | Battery to hybrid |
| 2 | 1 | 2 | Hybrid |
| 2 | 2 | 1 | Hybrid |
| 2 | 2 | 3 | Hybrid |
| 2 | 3 | 2 | Hybrid |
| 3 | 1 | 2 | Hybrid to battery |
| 3 | 2 | 1 | Battery to hybrid |
| 3 | 2 | 3 | Battery |
| 3 | 3 | 2 | Battery |

These selections / driving preferences may be overridden by the feedback loop described with reference to Figure 4. For example, the distance over which the train was planned to be run in battery only mode may be reduced if the difference between the predicted state of charge and the actual state of charge indicates. Or the train can be run in hybrid mode, when it might otherwise be in battery only mode, if the state of charge is predicted to be sufficiently low relative to the target state of charge.

While the invention has been described in conjunction with the exemplary embodiments described above, many equivalent modifications and variations will be apparent to those skilled in the art when given this disclosure. Accordingly, the exemplary embodiments of the invention set forth above are considered to be illustrative and not limiting. Various changes to the described embodiments may be made without departing from the spirit and scope of the invention.

For the avoidance of any doubt, any theoretical explanations provided herein are provided for the purposes of improving the understanding of a reader. The inventors do not wish to be bound by any of these theoretical explanations.

Any section headings used herein are for organizational purposes only and are not to be construed as limiting the subject matter described.

Throughout this specification, including the claims which follow, unless the context requires otherwise, the word "comprise" and "include", and variations such as "comprises", "comprising", and "including" will be understood to imply the inclusion of a stated integer or step or group of integers or steps but not the exclusion of any other integer or step or group of integers or steps.

It must be noted that, as used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by the use of the antecedent "about," it will be understood that the particular value forms another embodiment. The term "about" in relation to a numerical value is optional and means for example +/- 10%.

## Claims

1.  A train for travelling on a railway network including routes with external power supply infrastructure and on routes without external power supply infrastructure, the train including a control system configured to operate a drive system of the train in a battery-only mode where power is drawn only from one or more on-board electrical storage systems, wherein the control system is configured to:

    monitor an actual state of charge of the one or more on-board electrical storage systems;

calculate a predicted future state of charge of the one or more on-board electrical storage systems, at a time in the future, based on the actual state of charge of the one or more on-board electrical storage systems and a planned usage of the train; and

modify one or more operating parameters of the train based on a difference between the predicted future state of charge at the time in the future and a target future state of charge.

2. The train of claim 1, wherein the control system is further configured to operate the drive system of the train in a hybrid mode in which power is drawn from an on-board generator assisted by the one or more on-board electrical storage systems.

3. The train of claim 1 or 2, wherein the control system is configured to modify one or more operating parameters of the train by selecting and implementing one or more power saving operations when the predicted future state of charge is less than the target future state of charge.

4. The train of claim 3, wherein the control system is configured to select a power saving operation to implement from a plurality of power operations based on a degree to which the predicted future state of charge is less than the target future state of charge.

5. The train of claim 3 or claim 4, wherein the power saving operations to be selected from include:

enhancing a regenerative braking performance;
recommending to a driver of the train that one or more auxiliary systems are switched off or have their performance reduced;
reducing a maximum output available from the one or more on-board electrical storage systems;
switching off one or more auxiliary systems or reducing their performance;
increasing an output from an on-board generator;
reducing a planned distance over which the train is scheduled to run in the battery-only mode; and
forcing an activation of an on-board generator until a predetermined heightened state of charge of the on-board electrical storage system is achieved.

6. The train of any preceding claim, wherein the control system is configured to modify one or more operating parameters of the train by increasing utilisation of the on-board electrical storage system when the predicted future state of charge is greater than the target future state of charge.

7. The train of claim 6, wherein the control system is configured to increase utilisation of the on-board electrical storage system by an amount based on a degree to which the predicted future state of charge is greater than the target future state of charge.

8. The train of either claim 6 or claim 7, wherein increasing utilisation of the on-board electrical storage system is achieved by the control system performing one or more of the following operations:

enhancing an electric braking performance;
recommending to a driver of the train an increase of an auxiliary system performance;
increasing an auxiliary system performance;
reducing a maximum output available from an on-board generator;
increasing an output from the on-board electrical storage system;
reducing a planned distance over which the train is scheduled to run in a hybrid mode;
increasing a planned distance over which the train is scheduled to run in battery-only mode; and
forcing an activation of the on-board electrical storage system and disconnecting an on-board generator until a predetermined lowered state of charge of the on-board electrical storage system is achieved.

9. The train of any preceding claim, wherein the control system configured to operate the drive system of the train in an over-head mode in which power is drawn from an overhead line through one or more pantographs of the train.

10. The train of claim 9, wherein the control system is configured, when the drive system is being operated in the overhead mode, to charge the one or more on-board electrical storage systems using power drawn from the overhead line.

11. The train of any preceding claim, wherein the control system is configured to calculate the predicted future state of charge by obtaining from a database: (i) a distance over which the drive system must be operated in the battery-only mode; and (ii) a distance over which the drive system may be operated in a hybrid mode, and utilising these in the calculation.

12. The train of any preceding claim, wherein the control system is further configured to calculate the predicted future state of charge by obtaining a driving plan, the driving plan including information on a notch setting for each of a plurality of stages of a planned journey and utilising this in the calculation.

13. The train of any preceding claim, wherein predicting the future state of charge includes determining one or more recharging phases of the planned usage of the train, during which the state of charge of the on-board electrical storage systems is increased.

14. The train of any preceding claim, wherein predicting the future state of charge includes utilising the equation:

$$y = a \cdot A + b \cdot B$$

where $y$ is the predicted energy consumption, $a$ is the distance over which the train is planned to operate in battery only mode, $b$ is the distance over which the train is planned to operate in a hybrid mode, $A$ is a constant representing the power consumed per unit distance when operating in the battery only mode, and $B$ is a constant representing the power consumed per unit distance when operating in the hybrid mode.

15. A method of operating a train on a railway network, the railway network including routes with external power supply infrastructure and routes without external power supply infrastructure, the train including a control system configured to operate a drive system of the train in a battery-only mode where power is drawn only from one or more on-board electrical storage systems,
wherein the control system:

    monitors an actual state of charge of the one or more on-board electrical storage systems;
    calculates a predicted future state of charge of the one or more on-board electrical storage systems, at a time in the future, based on the actual state of charge of the one or more on-board electrical storage systems and a planned usage of the train; and
    modifies one or more operating parameters of the train based on a difference between the predicted future state of charge at the time in the future and a target future state of charge.

Fig. 1

Fig. 2

EP 4 371 800 A1

| Centre position | Applied resource | Distance (m) |
|---|---|---|
| A | Battery | 1000 |
| B | Hybrid | 0 |
| C | Battery | 500 |

Fig. 3

EP 4 371 800 A1

Fig. 4

Fig. 5

### Third level solution to lower SoC

> Forced activation of Battery and disconnecting GU until the SOC is reaching a certain level(for example, the value is within plus/minus 2%

### Second level solution to lower SoC

> Updating the balance of distance for HV and Battery.
> the distance of battery is set longer and the distance of HV is shorter.

### First level solution to lower SoC

> Enhancing the electric braking performance | Recommendation of increasing auxiliary system performance

> Throttling the output from GU, Increasing the output from Battery

### First level solution to recover SoC

> Enhancing the regenerative braking performance | Recommendation of turning auxiliary system off

> Throttling the output from battery, Increasing the output from GU

### Second level solution to recover SoC

> Updating the balance of distance for HV and Battery.
> the distance of battery is set shorter and the distance of HV is set longer.

### Third level solution to recover SoC

> Forced activation of GU until the SOC is reaching a certain level (for example, the value is within plus/minus 2%

Value given to the decision unit (Value is given as %)

10%
5%
2%
0
-2%
-5%
-10%

## Fig. 6

Fig. 7

## Fig. 8A

| Point | Normal (setting) | Fast (setting) | Eco (setting) |
|---|---|---|---|
| △ | Hybrid(mode) | Hybrid | Hybrid to battery |
| ▲ | Hybrid to battery | Hybrid | Battery |
| Station | Battery | Hybrid | Battery |
| ▲ | Battery to hybrid | Hybrid | Battery |
| ▲ | Hybrid | Hybrid | Battery to hybrid |

## Fig. 8B

Europäisches
Patentamt

European
Patent Office

Office européen
des brevets

# EUROPEAN SEARCH REPORT

Application Number

EP 23 19 7349

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/251299 A1 (DONNELLY FRANK W [CA] ET AL) 10 November 2005 (2005-11-10) <br> * paragraph [0011] * <br> * paragraph [0012] * <br> * paragraph [0102] * <br> * paragraph [0079] – paragraph [0083]; figures 3-7 * <br> * paragraph [0146] – paragraph [0150] * <br> * figure 2a * | 1-8, 11-15 | INV. <br> B60L1/00 <br> B60L15/20 <br> B60L50/16 <br> B60L50/53 <br> B60L50/61 <br> B60L58/13 |
| X | JP 5 079535 B2 (HITACHI LTD) 21 November 2012 (2012-11-21) <br> * figure 3 * <br> * paragraph [0033] – paragraph [0034] * <br> * paragraph [0041] * <br> * paragraph [0057] * <br> * paragraph [0062] – paragraph [0070]; figure 6 * | 1-10, 13-15 | |
| X | US 2002/174796 A1 (KUMAR AJITH KUTTANNAIR [US] ET AL) 28 November 2002 (2002-11-28) <br> * figure 5 * <br> * paragraph [0082] – paragraph [0087]; figures 7A-7D * <br> * paragraph [0131] * | 1-5, 9, 10, 13-15 | |

TECHNICAL FIELDS SEARCHED (IPC)

B60L

The present search report has been drawn up for all claims

| Place of search | Date of completion of the search | Examiner |
|---|---|---|
| The Hague | 9 February 2024 | Benedetti, Gabriele |

EPO FORM 1503 03.82 (P04C01)

## ANNEX TO THE EUROPEAN SEARCH REPORT
## ON EUROPEAN PATENT APPLICATION NO.

EP 23 19 7349

This annex lists the patent family members relating to the patent documents cited in the above-mentioned European search report.
The members are as contained in the European Patent Office EDP file on
The European Patent Office is in no way liable for these particulars which are merely given for the purpose of information.

09-02-2024

| Patent document cited in search report | Publication date | Patent family member(s) | Publication date |
|---|---|---|---|
| US 2005251299 A1 | 10-11-2005 | US 2005251299 A1<br>WO 2005097573 A2 | 10-11-2005<br>20-10-2005 |
| JP 5079535 B2 | 21-11-2012 | JP 5079535 B2<br>JP 2009183079 A | 21-11-2012<br>13-08-2009 |
| US 2002174796 A1 | 28-11-2002 | NONE | |

EPO FORM P0459

For more details about this annex : see Official Journal of the European Patent Office, No. 12/82

**REFERENCES CITED IN THE DESCRIPTION**

**Patent documents cited in the description**

- EP 2689983 A